# EUROPEAN PATENT APPLICATION

(11) **EP 1 795 516 A1**
(43) Date of publication of application: **13.06.2007**
(21) Application number: 05077833.1
(22) Date of filing: 12.12.2005
(51) Int. Cl.: C05D 9/02, C05B 19/00

(54) **Method for improving the cobalt uptake in forage**

(71) Applicant: Solutia Europe N.V./S.A., 1050 Brussels (BE); Kemira Growhow N.V. /S.A., 1300 Wavre (BE)
(72) Inventor: Laurent, Bernard G., 5170 Lustin (BE); Paeffgen, Stefan M. M., 1325 Chaumont Gistoux (BE)
(74) Representative: Colens, Alain M.G.M.

(57) **Abstract**

A method for increasing the cobalt uptake in forage is disclosed by spreading a micronutrient fertilizer in a level corresponding to of from 10 to 200 g cobalt/ha. The fertilizer is prepared, in sequence, by preparing a phosphono-cobalt chelate in a liquid form, followed by granulating that liquid with a solid carrier other than a water-soluble phosphate and thereafter admixing the micronutrient granulate formed with a fertilizer and/or a soil conditioner.

## Description

This invention concerns a method for beneficially increasing the cobalt uptake in forage. In more detail the inventive method concerns spreading a granular cobalt containing composition prepared by forming a liquid cobalt phosphono-chelant followed by granulating this liquid with the aid of a solid carrier other than a water-soluble phosphate and admixing the granulated cobalt chelant composition with a major amount of an N-P-K complex fertilizer and/or a soil conditioner. A particularly preferred chelant can be represented by hydroxyl C₁-C₆ alkylene diphosphonic acid species. The granulates so formed can be spread in a level of from 10 to 200 g Co/ha.

The use of cobalt as a micronutrient capable of producing enhanced cobalt uptake in forage quality is well known. Such cobalt promotes the B12 vitamin synthesis which can facilitate forage digestion. However, the plant uptake of cobalt was known to be very marginal with the inherent observations that objectionably high levels of undesirable cobalt would accumulate in the soil. In fact, the situation has been deteriorating and substantial R&D undertakings have not produced any economically and environmentally acceptable remedies. As one can expect, the art is fairly crowded without offering any hint towards beneficially improving the enhancements of cobalt uptake by effectively controlling and reducing cobalt availability and accumulation in the soil.

RU 2003-110978 discloses nutritive formulations containing trace elements, including cobalt, in combination with chelating organophosphonates such as amino trimethylene phosphonic acid. The formulations are used as aqueous solutions. RU 2.167.133 describes liquid fertilizers containing trace elements and a sequestering agent selected from phosphonates and non-phosphonate species e.g. EDTA. Gigiena I Sanitariya, 1987 (11), 88-99, describes the use of complex N-P-K fertilizers with trace elements, e.g. cobalt, and phosphonic acid chelating agents for agricultural application. The use of phosphonates in liquid fertilizers is also known from AU 424.098. The phosphonate can inhibit the precipitation of trace elements and impurities. GB 1.139.191 also discloses that phosphonates, upon addition to a liquid K-P fertilizer containing trace elements, prevent precipitation. US2003/0101735 relates to generally liquid fertilizer additives including chelated metal ions in the form of aminophosphonate complexes. The compositions can be converted into granules with the aid of inorganic or organic carrier absorbed with a micronutrient e.g. cobalt.

It is a major object of this invention to provide means for enhancing the cobalt uptake in forage. Yet another object of this invention aims at generating technologies capable of reducing soil levels of ineffective/accumulatable cobalt resulting from the micronutrient application of cobalt. In another approach, this invention seeks to provide storage-stable granular micronutrient/fertilizer/filler combinations for application to forage. In still another approach, granular micronutrient compositions ready-for-use are envisaged allowing an easily controllable and uniform spreading of the micronutrient compositions.

The foregoing and other objects can now be met by means of a method comprising the forage spreading of a micronutrient fertilizer composition.

The terms "phosphonic acid" and "phosphonate" are used interchangeably throughout the description, the examples and the claims. The terms "percent" or "%" mean, unless defined differently, "percent by weight" or "% by weight". The terms "cobalt" or "Co" mean the cobalt ion or (cobalt) chelate expressed as elemental cobalt. The terms "chelate" and "complex" are identical and can be used interchangeably. The term "ha" means hectare, a surface of 10 000 m². The term "mµ" means micron i.e. 10⁻⁶ m.

A method was now discovered which can serve for unexpectedly increasing the cobalt uptake in forage. In more detail, this invention concerns a method for increasing the cobalt uptake in forage by spreading a granular cobalt containing composition in a level of from 10 to 200 g cobalt/ha, said composition being prepared by:
(a) forming a chelated micronutrient solution by reacting, in an aqueous medium, a water-soluble cobalt salt and a phosphonate chelant selected from the group of an aminoalkylene polyphosphonic acid, having from 1 to 12 carbon atoms in the alkylene moiety, and a hydroxyalkylene polyphosphonic acid having from 2 to 12 carbon atoms in the alylene moiety, and mixtures thereof, in a molar ratio of cobalt to phosphonate of from 1 to 0.4 to 1 to 3:
(b) granulating the micronutrient solution so obtained by combining:
   (i)from 2 % to 30 % by weight of the micronutrient solution; with from
   (ii) 98 % to 70 % by weight of a solid carrier other than a water-soluble phosphate; followed by
(c) admixing from 2 % to 30 % by weight of the granulated micronutrient with from 98 % to 70 % by weight of a fertilizer carrier selected from the group of N-P-K complex fertilizers and soil conditioners.

A first essential component for use in the method of the invention is a cobalt-phosponate chelant. The cobalt reactant, capable of combining, in the reaction medium, with the polyphosphonic chelant can be represented by conventional cobalt compounds including cobalt hydroxide, cobalt oxide, cobalt carbonate, cobalt sulphate, cobalt chloride and cobalt nitrate. Cobalt is used in levels to ensure that the corresponding cobalt phosphonate chelant is soluble in the liquid reaction medium at ambient temperature. In general not more than 2.5 % cobalt is used. The water-level in the liquid reaction medium is generally 80 % or more. The level of the phosphonate chelant can be calculated routinely based on the selected molar ratios. The pH of the cobalt chelate solution, measured as is at 20 °C, is greater than 4, preferably of from 6 to 11.

The essential polyphosphonate chelant is selected from the group of an aminoalkylene polyphosphonic acid having from 1 to 12, preferably from 1 to 6, carbon atoms in the alkylene moiety and a hydroxyalkylene polyphosphonic acid having from 2 to 12, preferably from 2 to 6, carbon atoms in the alkylene moiety. Actually preferred polyphosphonic acid chelants can be represented by aminotrimethylene phosphonic acid, diethylene triamino pentamethylene phosphonic acid, hexamethylene diamino tetramethylene phosphonic acid, ethylenediamino tetramethylene phosphonic acid and hydroxyethylene diphosphonic acid. The latter compound is particularly preferred. The phosphonate chelant can be represented by the acid and by the water-soluble salts thereof e.g. by the ammonium, the potassium and by the sodium salt.

The molar ratio of cobalt to polyphosphonate can vary in the range of from 1 : 0.4 to 1 : 3, preferably of from 2 : 0.8 to 1 : 1.5, particularly of from 1 : 1 to 1 : 1.2. A minimal molar excess of the polyphosphonate can be beneficial to thus maintain the level of non-sequestered cobalt below 0.01 % and accordingly reduce and eliminate undesirable cobalt accumulation in the soil and other inconveniences. The polychelant contains, at least, two phosphonic acid groups per molecule; in the event aminopolyphosphonic acid is used, preferably all the N-H functions in the starting raw material containing the -N-radical, generally an amine, are converted to the corresponding alkylene phosphonic radicals.

The liquid cobalt polyphosphonate micronutrient solution is subsequently granulated together with a solid carrier other than a water-soluble phosphate. The term "water-soluble phosphate carrier" is defined in Regulation (EC) N° 2003/2003 of october 13, 2003, Methods 3.1.6 and 3.2. The pH of the cobalt chelate solution, measured as is at 20 °C, is equal to or greater than 4, generally from 6 to 11. To that effect, of from 2 to 30 %, preferably of from 4 to 20 % and particularly of from 4 to 14 % of the micronutrient solution are granulated in an art established manner with of from 98 to 70 %, preferably of from 96 to 80 % and particularly of from 96 to 86 % of the solid carrier other than a water-soluble phosphate. Water-soluble phosphate carriers can immobilize cobalt and thus reduce the level of cobalt chelate effectively available for plant uptake. Examples of carriers suitable for granulating the cobalt micronutrient solution include limestone, dolomite, magnesium carbonate, magnesium oxide, calcium oxide, calcium hydroxide, magnesium hydroxide, magnesium sulphate including calcined and hydrated species (kieserite; epsomite), clays such as illite, bentonite, sepiolite, biotite, smectite, atapulgite, calcium sulphate anhydrate, calcium sulphate hemi-hydrate and calcium sulphate di-hydrate and mixtures of such species. Limestone and dolomite are for reasons including availability, economics and safety especially preferred. Suitable limestones can be from natural or synthetic origin. Natural limestones exhibit a low reactivity and constitute a preferred choice. Synthetic limestones can be prepared by the Odda process and can have a particle diameter around 60-90 mµ. More in general, suitable carriers have a particle diameter below 350 mµ.

The micronutrient granules are subsequently admixed with an N-P-K fertilizer and/or a soil conditioner. To that effect of from 2 to 30 %, preferably of from 4 to 20 %, particularly of from 4 to 10 %, of the micronutrient granules are admixed with of from 98 to 70 %, preferably of from 96 to 80 %, particularly of from 96 to 90 %, of an N-P-K fertilizer and/or a soil conditioner. N-P-K fertilizers are well known and have been used for a long time. N fertilizers can be represented by ammonium nitrate grades such as AN 33.5, CAN 27, CAN 26, CAN 20 and CAN 10 containing respectively around 96 %, 77 %, 74 %, 57 % and 29 % of ammonium nitrate. Nitrogen-phosphorous (N-P), nitrogen-potassium (N-K), nitrogen-phosphorous-potassium (N-P-K), phosphorous, potassium and more in general all primary nutrients can be used for admixing with the micronutrient granules. Examples of non-AN nutrients include ammonium sulphate, phosphate rock, e.g. fluoro apatite, ammonium phosphates such as mono- and di-ammonium phosphates and potassium salts including potassium chloride and potassium sulphate. The soil conditioners can also be represented by e.g. the solid carriers other than water-soluble phosphates that are used for granulating the micronutrient solution. The selection of the N-P-K fertilizers and/or soil conditioners will, of course, depend upon application parameters. The micronutrient granules are effectively coated and the cobalt-chelate is thus substantially immune from any adverse interference e.g. cobalt immobilization originating from the primary nutrient and/or the soil conditioner. The mixing of the micronutrient granule and the solid fertilizers/conditioners can be done by standard mechanical drum mixing of the solids. The granules so prepared combining e.g. the limestone properties with the cobalt chelate provide time controlled (gradual) release of the cobalt to the plant.

Comparative tests are conducted to illustrate the benefits of the claimed invention. To that effect, cobalt containing compositions, prepared as set forth in the description and in the claims, are used containing the following ingredients.

An aqueous cobalt solution is prepared from a water-soluble cobalt salt, i.e. CoCl₂, thereby mixing 14 g cobalt with water to 1 kg. A phosphonate chelant is added to the cobalt solution to establish a molar proportion of cobalt(metal) : phosphonate of 1 : 1.05. The pH of the solution so prepared, measured as is at 20 °C, is 9.

1 Kg of finely ground dolomite, particle diameter 90 % ≤150 mµ, is mixed in a standard granulator together with 154 g of the cobalt-chelate solution to thus yield a granulate having a particle diameter between 2 and 5 mm. The granulated product is dried to a water-level below 2 %.

50 g of the dried granulated micronutrients are then admixed with 950 g N-P-K fertilizer to yield a final grade specification of 20 % N, and 5 % P₂O₅. The composition contains 0.01 % cobalt in chelated form, expressed as elemental cobalt.

The grade so prepared is used for top dressing fertilizer for forage. The chelants used in the grades are listed below.

| Chelant | Rate of Co g/ha-Examples N° | | | | | | | Co-content in forage (*) | |
|---|---|---|---|---|---|---|---|---|---|
| | Blank | 1(c) | 2 | 3 | 4 | 5 | 6 | (**) | (***) |
| - | 0 | | | | | | | ≤ 40 | 50 |
| - | | 160 | | | | | | ≤ 40 | 57 |
| HMDTMP | | | 48 | | | | | 75 | 82 |
| AMTP | | | | 48 | | | | 85 | 110 |
| DTPMP | | | | | 48 | | | 47 | 91 |
| HEDP | | | | | | 48 | | 68 | 185 |
| EDTMP | | | | | | | 48 | 56 | 77 |

| | | | | | | | | | |
|---|---|---|---|---|---|---|---|---|---|
| (*): the cobalt content is expressed as mµ Co/k on dry matter. (**):the measurements are done on forage samples cut 3 weeks after the fertilizer application; (***): the measurements are done on forage samples cut 7 weeks after the fertilizer application. | | | | | | | | | |

HMDTMP = hexamethylene diamino tetramethylenephosphonic acid;

AMTP = aminotrimethylene phosphonic acid;

DTPMP = diethylenetriamino pentamethylene phosphonic acid;

HEDP = hydroxyethylene diphosphonic acid;

EDTMP = ethylenediamino tetramethylene phosphonic acid.

The forage sample is digested by wet acid mineralization and subsequently analyzed for cobalt. The analytical method is described in Regulation (EC) N° 2003/2003 of October 13, 2003, Method 9.6.

The results show that the cobalt uptake is, after 7 weeks, enhanced by a factor of at least 4 in case the cobalt is used as a phosphonate chelant. This allows to reduce the amount of cobalt applied per hectare while the level of cobalt content in the forage remains at least constant or better compared to conventional mineral cobalt application. Meanwhile the amount of non plant absorbed cobalt is reduced significantly; this implies a desirable reduction in the cobalt accumulation in the ground.

## Claims

1. A method for increasing the cobalt uptake in forage by spreading a granular cobalt containing composition in a level of from 10 to 200 g cobalt/ha, said composition being prepared by:
(a) forming a chelated micronutrient solution by reacting, in an aqueous medium, a water-soluble cobalt salt and a phosphonate chelant selected from the group of an aminoalkylene polyphosphonic acid, having from 1 to 12 carbon atoms in the alkylene moiety, and a hydroxyalkylene polyphosphonic acid, having from 2 to 12 carbon atoms in the alkylene moiety, and mixtures thereof, in a molar ratio of cobalt to phosphonate of from 1 to 0.4 to 1 to 3:
(b) granulating the micronutrient solution so obtained by combining:
(i) from 2 % to 30 % by weight of the micronutrient solution; with from
(ii) 98 % to 70 % by weight of a solid carrier other than a water-soluble phosphate; followed by
(c) admixing from 2 % to 30 % by weight of the granulated micronutrient with from 98 % to 70 % by weight of a fertilizer carrier selected from the group of N-P-K complex fertilizers and soil conditioners.

2. The method in accordance with Claim 1 wherein the aminoalkylene polyphosphonic acid has from 1 to 6 carbon atoms in the alkylene moiety and the hydroxyalkylene polyphosphonic acid has from 2 to 6 carbon atoms in the alkylene moiety.

3. The method in accordance with Claim 1 wherein the N-P-K fertilizer and the soil conditioner have a pH equal to or greater than 4.5, measured at 10 % by weight in water at 20 °C, and a water content below 1 % by weight, expressed on the basis of the N-P-K fertilizer and/or soil conditioner (100 %).

4. The method in accordance with Claims 1 and 2 wherein the phosphonate chelant is selected from the group of aminotrimethylene phosphonic acid, diethylenetriamino pentamethylene phosphonic acid, hexamethylenediamino tetramethylene phosphonic acid, ethylenediamino tetramethylene phosphonic acid and hydroxyethylene diphosphonic acid.

5. The method in accordance with Claim 1 wherein the molar ratio of cobalt to phosphonate chelant is in the range of from 1 : 0.8 to 1 : 1.5.

6. The method in accordance with Claim 1 wherein the micronutrient solution represents of from 4 to 14 % by weight and solid carrier other than the water-soluble phosphate represent from 96 to 80 % by weight, expressed in relation to the sum (100 %) of these components.

7. The method in accordance with Claim 1 wherein the molar ratio of cobalt to phosphonate chelant is in the range of from 1 : 1 to 1 : 1.2.
